(19) **Europäisches Patentamt**

**European Patent Office**

**Office européen des brevets**

(11) Veröffentlichungsnummer: **0 028 706**
**B1**

(12) # EUROPÄISCHE PATENTSCHRIFT

(45) Veröffentlichungstag der Patentschrift:
07.03.84

(21) Anmeldenummer: 80106064.1

(22) Anmeldetag: 07.10.80

(51) Int. Cl.³: **H 04 L 25/03, H 04 B 3/04,**
**H 03 K 5/01**

(54) Vorrichtung zur automatischen Entzerrung elektrischer Datenübertragungswege.

(30) Priorität: 09.11.79 DE 2945332

(43) Veröffentlichungstag der Anmeldung:
20.05.81 Patentblatt 81/20

(45) Bekanntmachung des Hinweises auf die Patenterteilung:
07.03.84 Patentblatt 84/10

(84) Benannte Vertragsstaaten:
AT BE CH DE FR GB IT LI LU NL SE

(56) Entgegenhaltungen:
DE - A - 2 451 912
DE - A - 2 522 983
DE - A - 2 908 588
DE - B - 2 264 110
DE - B - 2 412 127

(73) Patentinhaber: **NIXDORF COMPUTER AG,**
**Pontanusstrasse 55, D-4790 Paderborn (DE)**

(72) Erfinder: **Hüllwegen, Josef, Ing.grad., Hüttenstrasse 61,**
**D-4791 Altenbeken (DE)**

(74) Vertreter: **Schaumburg, Schulz-Dörlam & Thoenes,**
**Mauerkircherstrasse 31 Postfach 86 07 48,**
**D-8000 München 86 (DE)**

## Vorrichtung zur automatischen Entzerrung elektrischer Datenübertragungswege

Die Erfindung bezieht sich auf eine Vorrichtung zur automatischen Entzerrung nach dem Oberbegriff des Anspruchs 1.

Eine derartige Einrichtung ist bekannt aus der DE-A1- 25 22 983 Hierbei ist die Taktgeneratoreinrichtung von einem von dem entzerrten Empfangssignal über einen Demodulator beaufschlagten, nichtlinearen Funktionsgeber gebildet. Dessen Ausgang ist über ein lineares Filter mit dem Eingang des Gleichrichters der Stellsignalerzeugungseinrichtung verbunden. Der Funktionsgeber erzeugt ein vom Empfangssignal hinsichtlich der Phasenlage unabhängiges periodisches Signal, dessen Periode auf die Bitfolgefrequenz des Empfangssignals abgestimmt ist. Im völlig entzerrten Zustand weist das Ausgangssignal des Funktionsgebers ein bestimmtes Linienspektrum auf, und das nachgeschaltete lineare Filter ist derart ausgebildet, dass die den Spektrallinien des genannten Linienspektrums entsprechenden Frequenzbereiche unterdrückt werden, so dass das aufgrund des Ausgangssignals des linearen Filters erzeugte Stellsignal ein Minimum aufweist. Beim Auftreten einer Verzerrung weist dagegen das Ausgangssignal des Funktionsgebers zusätzliche Spektrallinien auf, die ausserhalb der vorgenannten Spektrallinien liegen und von dem linearen Filter nicht unterdrückt werden, so dass die dementsprechend durchgelassenen Signalanteile zu einer Veränderung des Stellsignals gegnüber dem Minimum führen. Der Funktionsgeber erzeugt dabei ein vom Empfangssignal hinsichtlich der Phasenlage unabhängiges Ausgangssignal. Das lineare Filter erfordert nachteiligerweise einen relativ hohen Bauaufwand, da es mehrere Durchlassbereiche und dazwischenliegende, relativ schmalbandige Sperrbereiche aufweisen muss.

Der Erfindung liegt die Aufgabe zugrunde, eine Vorrichtung zur automatischen Entzerrung der eingangs genannten Art mit geringerem Schaltungsaufwand auszubilden.

Die Aufgabe wird gemäss der Erfindung bei einer Vorrichtung zur automatischen Entzerrung der eingangs genannten Art durch die im Kennzeichenteil des Anspruchs 1 angegebenen Merkmale gelöst

Bei der Vorrichtung gemäss der Erfindung wird der Integrator der Stellsignalerzeugungseinrichtung über deren gleichrichtend wirkende Schaltung, beispielsweise eine Quadriereinheit oder auch in bekannter Weise eine Gleichrichtereinheit. sowie über den zwischengeschalteten, vom Taktsignal gesteuerten Schalter periodisch und jeweils vorübergehend mit Ausschnitten aus dem Empfangssignal beaufschlagt, deren Amplituden ein Mass für die Verzerrung bilden, und damit diese Eigenschaft der Empfangssignalausschnitte erhalten wird, erfolgt mittels der Taktgeneratoreinrichtung eine Synchronisierung der Taktsignale mit den Sollzeitpunkten der Schrittumschläge des Empfangssignals. Es wird so ein konstruktiv aufwendiges Filternetzwerk zwischen Taktgeneratoreinrichtung und Stellsignalerzeugungseinrichtung vermieden.

Ausgestaltungen der Erfindung sind in den Unteransprüchen angegeben.

Die Erfindung sowie sich aus ihr ergebende Vorteile werden nachfolgend anhand der Figuren im einzelnen erläutert. Es zeigen:

Fig. 1 ein Blockschaltbild einer Ausführungsform der erfindungsgemässen Vorrichtung;

Fig. 2 eine Reihe von voneinander unabhängigen Diagrammen 1 bis 5 zur Erläuterung der Grundlagen der erfindungsgemässen Stellsignalerzeugung;

Fig. 3 eine mehr ins einzelne gehende Schaltung des Blockschaltbilds von Fig. 1 mit Dimensionierungsbeispielen;

Fig. 4 eine andere Ausführungsform des Entzerrers, ebenfalls mit einem Dimensionierungsbeispiel;

Fig. 5 ein Blockschaltbild des an sich bekannten Dämpfungsentzerrers, der anstelle des Eingangsregelverstärkers von Fig. 1 insbesondere in Verbindung mit einem Entzerrer nach Fig. 4 verwendbar ist;

Fig. 6 die Dämpfungscharakteristik und den Arbeitsbereich des Entzerrers für den Fall üblicher Fernsprechkabel oder pupinisierter Leitungen und die in Fig. 3 angegebene Dimensionierung;

Fig. 7 die Charakteristik und den Arbeitsbereich des Laufzeitentzerrers bei der in Fig. 4 angegebenen Dimensionierung und

Fig. 8 und 9 äquivalente Serien- und Parallelanordnungen von Bandpassstufen zur Bildung eines Entzerrers der in Fig. 4 gezeigten Art.

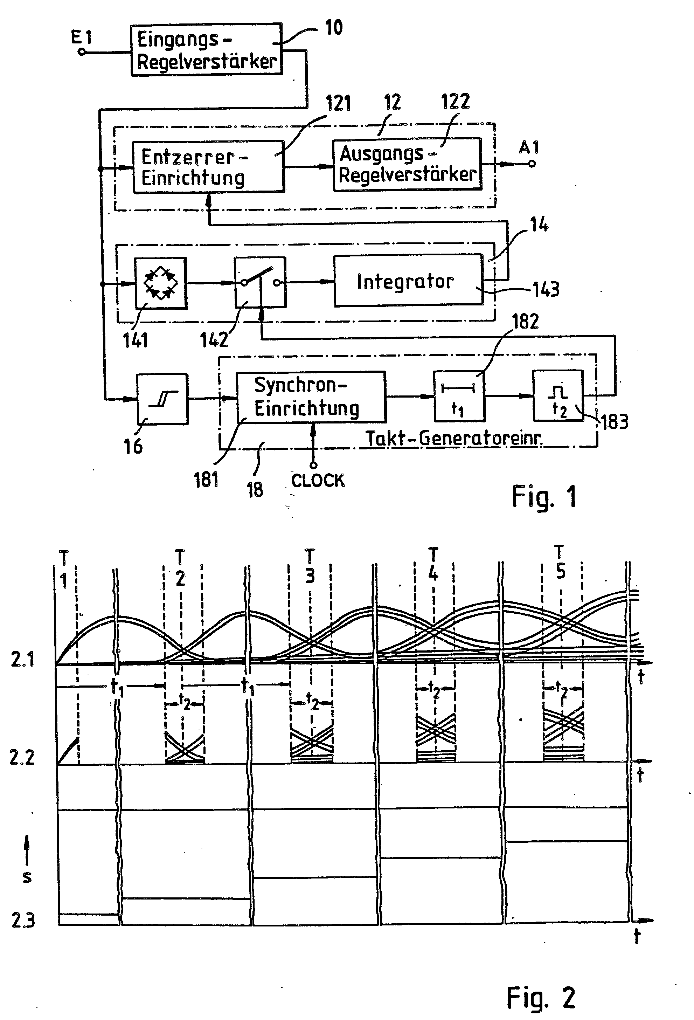

Es sollen nun zunächst die Grundlagen der Erfindung anhand der Fig. 1 und 2 erläutert werden.

Das Blockschaltbild von Fig. 1 stellt einen Teil des Empfängers dar, wobei am Eingang $E_1$ die verzerrten, ggf. bereits demodulierten Datensignale anstehen und am Ausgang $A_1$ die entzerrten Datensignale abgegeben werden. Die verzerrten Datensignale gelangen vom Eingang $E_1$ zunächst auf einen Eingangsregelverstärker 10, dessen Aufgabe es ist, an seinem Ausgang zur Beseitigung der Leitungsdämpfung und zum Ausgleich eines eventuell falschen Speisepegels ein Signal konstanter Amplitude abzugeben. Der Ausgang des Eingangsregelverstärkers 10 ist mit dem Eingang des Entzerrers 12, dem Eingang einer Stellsignalerzeugungseinrichtung 14 und dem Eingang eines symmetrischen Schwellwertschalters 16 verbunden. Der Entzerrer 12 umfasst hier die eigentliche Entzerrereinrichtung 121 und einen dieser nachgeschalteten Ausgangsregelverstärker 122, dessen Ausgang mit dem Ausgangsanschluss $A_1$ verbunden ist. Der Ausgangsregelverstärker dient dazu, die Amplitude des entzerrten Datensignals zu normalisieren.

Die Stellsignalerzeugungseinrichtung 14 umfasst eine Gleichrichtereinheit 141, die durch eine Quadriereinheit ersetzt werden könnte, einen gesteuerten Schalter 142 und einen Integrator 143. Dem Schwellvertschalter 16 ist eine Taktgeneratoreinrichtung 18 nachgeschaltet, die im folgenden näher erläuterte Taktimpulse zur Ansteuerung des Schalters 142 erzeugt. Der symmetrische Schwellwertschalter 16 erzeugt zunächst aus den empfangenen Datensignalen Rechtecksignale, die eine Synchroneinrichtung 181 der Taktgeneratoreinrichtung 18 steuern. An dem mit "CLOCK" bezeichneten Eingang wird der Synchroneinrichtung von einem nicht dargestellten Taktgeber ein Betriebstaktsignal zugeführt. Mit Hilfe einer hier nicht näher zu beschreibenden Regeleinrichtung erzeugt die Synchroneinrichtung Taktsignale, deren eine Schaltflanke mit jeweils einem Sollzeitpunkt der Schrittumschläge des empfangenen Datensignals zusammenfällt. Unter Sollzeitpunkt der Schrittumschläge wird der Zeitpunkt verstanden, zu dem bei einem optimal entzerrten Datensignal die Schrittumschläge auftreten können. Der Abstand zwischen zwei Sollzeitpunkten entspricht demnach der Dauer einer Schrittlänge des Datensignals. In Fig. 2 sind diese Sollzeitpunkte mit T gekennzeichnet. Der Synchroneinrichtung 181 ist eine Verzögerungsschaltung 182 nachgeschaltet, die eine Verzögerung der Ausgangsimpulse der Synchroneinrichtung um $t_1$ (siehe auch Fig. 2) bewirkt. Die verzögerten Impulse gelangen dann auf eine monostabile Kippstufe bzw. eine Impulsformereinrichtung 183, die Ausgangsimpulse der Dauer $t_2$ zur Steuerung des Schalters 142 abgibt. Die Dauer $t_2$ dieser Impulse und die Verzögerungszeit $t_1$ sind so bemessen, das die den Schalter 142 steuernden Taktimpulse symmetrisch um die Sollzeitpunkte T liegen, wie dies auch der Fig. 2 entnommen werden kann.

Fig. 2 zeigt verschiedene Diagramme 1 bis 5, die - dies sei betont - völlig unabhängig voneinander sind. Es handelt sich jeweils um einen Ausschnitt der im Verlauf mehrerer Abtastperioden des Schalters 142 am Ausgang der Gleichrichtereinheit 141 auftretenden Signale bei unterschiedlich starker Verzerrung die ausgehend vom Diagramm 1 zum Diagramm 5 zunimmt. Diese - ohne die im vorliegenden Fall vorgenommene Gleichrichtung - als «Augendiagramm» bekannte Signaldarstellung ermöglicht eine Aussage über das Ausmass der zu beseitigenden Verzerrungen. Bei unverzerrtem Datensignal kreuzen sich die einzelnen Linien der Schrittumschläge auf der Nullinie, wie dies im Diagramm 1 der Fall ist. Je grösser die Abweichung der einzelnen Linien der Schrittumschläge vom Kreuzungssollpunkt auf der Nullinie ist, desto stärker sind die Verzerrungen. Ein Mass für diese Abweichung ist nach der erfindungsgemäss vorgenommenen Gleichrichtung die Summe der Spannungszeitflächen der einzelnen Linien über der Nullinie im Zeitbereich $t_2$ um den Sollzeitpunkt T. Der Integrator 143 dient der Ermittlung dieser Summe, wobei der Schalter 142 jeweils nur einen der Zeitspanne $t_2$ entsprechenden Ausschnitt der gleichgerichteten Signale durchlässt und die Integrationszeit des Integrators mehrere Abtastperioden beträgt, um einen geeigneten Mittelwert als Stellsignal zu erhalten.

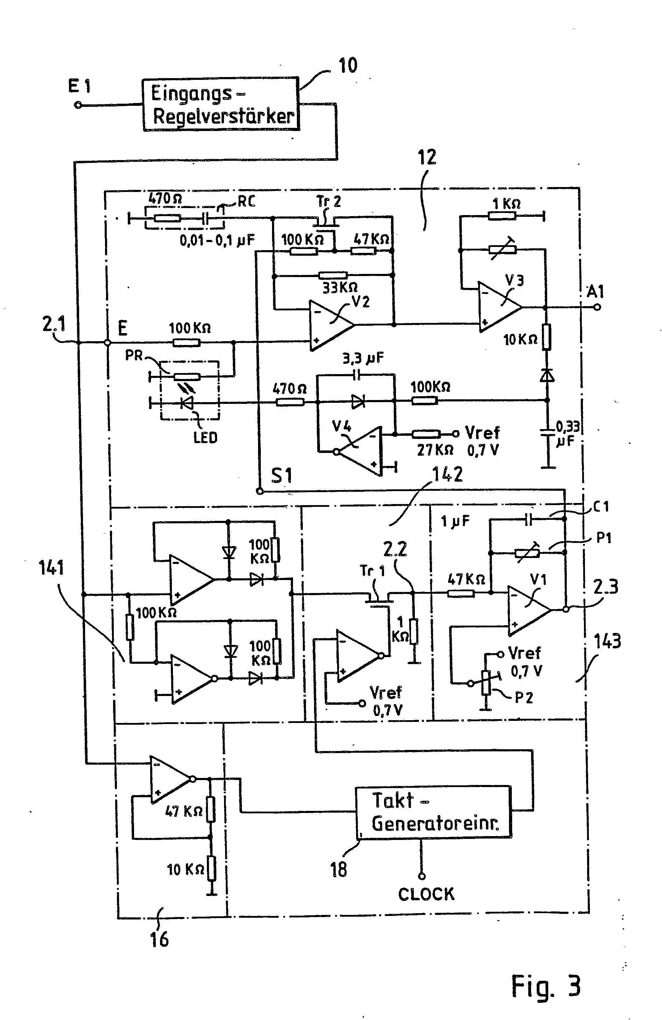

Unter 2.2 in Fig. 2 sind die jeweils mittels des Schalters 142 an den Integrator 143 über mehrere Abtastperioden angelegten Signalverläufe dargestellt. Es handelt sich also hier wie bei der Darstellung unter 2.1 jeweils um die Überlagerung der Signalverläufe während mehrerer Abtastzyklen des Schalters 142. Das am Ausgang des Integrators 143 auftretende Stellsignal S ist für die verschiedenen Fälle 1 bis 5 unter 2.3 in Fig. 2 gezeigt. Man erkennt, dass die Integration über mehrere Abtastperioden abhängig von der Stärke der Verzerrung zu einem mehr oder weniger grossen Stellsignal S führt. Durch den Integrator wird bei geeigneter Wahl der Zeitkonstante bewirkt, dass das Stellsignal S kontinuierlich am Stelleingang der Entzerrereinrichtung 121 anliegt und nicht etwa nach jedem Integrationsvorgang auf Null oder einen kleinen Wert zurückfällt. Dies kann dadurch realisiert werden, dass der Integrator 143 als ein Verzögerungsglied mit relativ grosser Zeitkonstante ausgebildet wird, wie es - für den Fachmann erkennbar - bei der Schaltung gemäss Fig. 3 der Fall ist.

Die Gleichrichtereinheit 141 ist erforderlich, weil sich der positive und der negative Zuwachs der Spannungszeitflächen im Augendiagramm infolge der verzerrungsbedingten Abweichung der einzelnen Linien der Schrittumschläge vom Kreuzungssollpunkt auf der Nullinie gerade kompensieren könnten, so dass die Integration ohne vorherige Gleichrichtung trotz unterschiedlicher Verzerrungen zu kaum unterscheidbaren Stellsignalen führen könnte. Es ist klar, dass eine Quadriereinheit anstelle der Gleichrichtereinheit 141 genauso gut verwendet werden könnte.

Bei der anhand von Fig. 1 dargestellten Ausführungsform wird der Entzerrer abhängig von den verzerrten Datensignalen so eingestellt, dass die Verzerrungen kompensiert werden. Es handelt sich also um eine Steuerung. Denkbar ist auch eine Regelung des Entzerrers, wenn die Gleichrichtereinheit 141 nicht mit den verzerrten Datensignalen, sondern mit den entzerrten Datensignalen vom Ausgang $A_1$ beaufschlagt wird. Die Entzerrereinrichtung 121 müsste dann so lange ihre Einstellung ändern, bis das Ausgangssignal des Integrators 143 Null ist bzw. einen Minimalwert hat. Vorteilhaft kann es auch sein, den Eingang des Schwellwertschalters 16 mit dem Ausgang $A_1$ anstatt mit dem Ausgang des Eingangsregelverstärkers 10 zu verbinden. Es ist leicht einsehbar, dass sich die Taktsignale aus den entzerrten Datensignalen mit grösserer Genauigkeit als aus den verzerrten Datensignalen ableiten lassen.

Schliesslich bezieht sich die Darstellung nach Fig. 1 auf den Fall, dass der Entzerrer mit den Basisbandsignalen beaufschlagt wird, also eine Entzerrung im Zeitbereich erfolgt. Falls die zu übertragenden Daten für die Übertragung beispielsweise über Fernsprechkanäle im Fernbereich durch Modulation in Signale umgeformt werden, die in Sprachkanal übertragbar sind, kann auch eine Entzerrung im Frequenzbereich vorgesehen werden, der Entzerrer also vor einen (nicht gezeigten) Demodulator geschaltet werden. Für diesen Fall ergibt sich von selbst, dass die Taktgeneratoreinrichtung 18 und die Stellsignalerzeugungseinrichtung 14 nicht mehr parallel zum Entzerrer 12 geschaltet, sondern mit dem entzerrten und danach demodulierten Signal beaufschlagt werden.

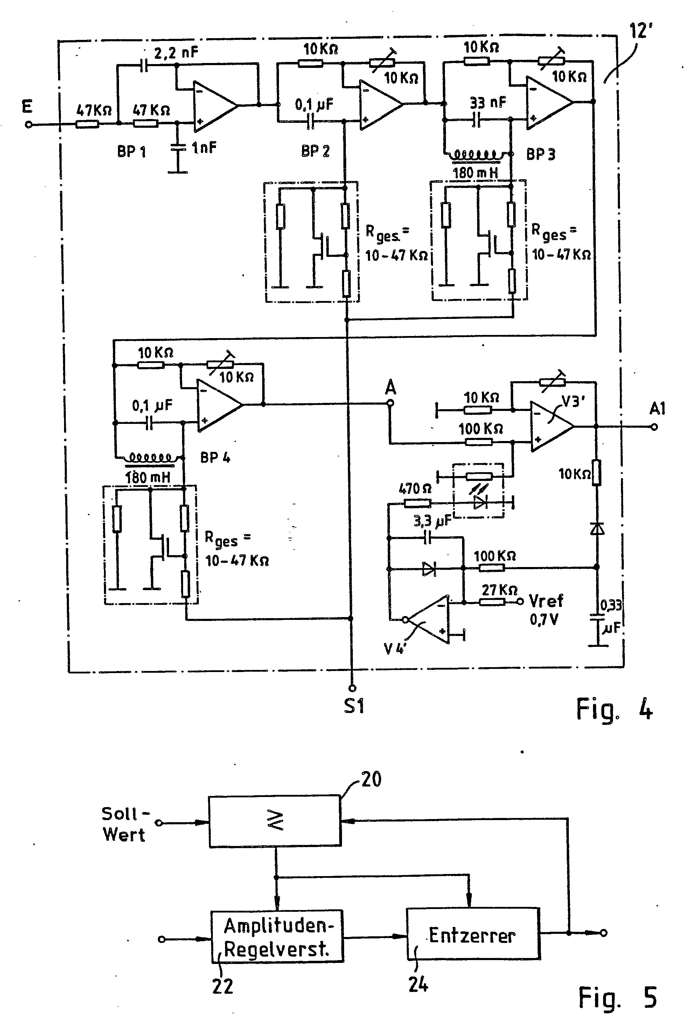

Fig. 3 zeigt die Anordnung nach Fig. 1 mit einer detaillierten Darstellung des Entzerrers 12 und der Stellsignalerzeugungseinrichtung 14. Die angegebene Dimensionierung der Schaltungselemente gilt hier wie auch bei Fig. 4 für den Fall üblicher Postkabel oder pupinisierter Leitungen und ist selbstverständlich als ein mögliches Beispiel anzusehen. Die Schaltung von Fig. 3 ist für den Fachmann aufgrund der voranstehenden Ausführungen leicht zu übersehen, so dass bezüglich der Schaltungseinzelheiten ausdrücklich auf die Darstellung Bezug genommen wird und nur auf einige Besonderheiten eingegangen werden soll. Die Schaltung ist in einer leicht integrierbaren Form ausgebildet und besitzt als eigentliches Schaltglied des Schalters 142 einen MOS-Feldeffekttransistor $Tr_1$. Der hier als Verzögerungsglied realisierte "Integrator" 143 umfasst einen rückgekoppelten Verstärker $V_1$, dessen Rückkopplungszweig die Parallelschaltung eines Kondensators $C_1$ mit einem Potentiometer $P_1$ aufweist. Der nicht invertierende Eingang des Verstärkers $V_1$ ist über ein Potentiometer $P_2$ mit einer einstellbaren Bezugsspannung beaufschlagt. Mit $P_1$ kann der Verstärkungsfaktor eingestellt werden, der einem bestimmten Proportionalbereich entspricht. Mit $P_2$ kann der Anfangswert vorgegeben werden.

Der Entzerrer 12 enthält den gemäss Darstellung beschalteten Verstärker $V_2$, dessen im Gegenkopplungskreis befindlicher Feldeffekttransistor $Tr_2$ über einen Spannungsteiler mit der Ausgangsspannung des Verstärkers $V_1$ beaufschlagt ist. Der Spannungsteiler am Gate des Transistors $Tr_2$ bewirkt eine Linearisierung der Transistorkennlinie durch geringe Gegenkopplungsspannung, während der dem Transistor parallel liegende 33 k$\Omega$-Widerstand eine Begrenzung der Verstärkung verursacht. Je nach Leitfähigkeitszustand des Transistors $Tr_2$ hat der Verstärker $V_2$ in Verbindung mit dem RC-Glied eine bestimmte Dämpfungsentzerrerkennlinie. Dem Verstärker $V_2$ ist ein Verstärker $V_3$ als Trennverstärker nachgeschaltet, dessen mit dem Ausgangsanschluss $A_1$ verbundener Ausgang das entzerrte Datensignal in ausreichender Amplitude zur Verfügung stellt. Damit sich die Amplitude dieses Signals nicht abhängig von der Entzerrereinstellung ändert, ist bei der in Fig. 3 gezeigten Ausführungsform der Erfindung eine Verstärkungsregelung vorgesehen. Ein mit dem Signal am Ausgangsanschluss $A_1$ beaufschlagter und als Integralregler geschalteter Verstärker $V_4$ ist an seinem Ausgang mit der Leuchtdiode LED eines Optokopplers verbunden. Der Fotowiderstand PR des Optokopplers bildet zusammen mit einem 100 k$\Omega$-Widerstand einen Spannungsteiler am Eingang des Verstärkers $V_2$. Statt des Optokopplers könnte auch ein Feldeffekttransistor benutzt werden, dessen Gatespannung über eine Anpassungsstufe von der Ausgangsspannung des Verstärkers $V_4$ abgeleitet würde.

Fig. 4 zeigt ein mögliches Beispiel eines Entzerrers 12' zur Laufzeitentzerrung. Dieser Entzerrer 12' könnte bei der Schaltung von Fig. 3 anstelle des Entzerrers 12 eingesetzt werden, wobei anstelle der Anschlüsse E, $A_1$ und $S_1$ in Fig. 3 die gleichbezeichneten Anschlüsse des Entzerrers 12' von Fig. 4 treten würden. Der Entzerrer 12' dessen Verstärker $V_3'$ und $V_4'$ den Verstärkern $V_3$ bzw. $V_4$ des Entzerrers 12 von Fig. 3 entsprechen, umfasst zwischen seinem Eingangsanschluss E und dem Eingang des Verstärkers $V_3'$ eine Kaskadenschaltung von vier frequenzabhängig rückgekoppelten Verstärkern, wobei die Rückkopplung bei dreien dieser Verstärker mittels des Stellsignals am Anschluss $S_1$ steuerbar ist. Im übrigen kann bezüglich Fig. 4 auf die leicht verständliche Darstellung der Schaltungseinzelheiten Bezug genommen werden, ohne dass es erforderlich schiene, die einzelnen Schaltungselemente und die Art ihrer Zusammenschaltung hier im einzelnen aufzuzählen. Als von dem Stellsignal angesteuerte Stellglieder dienen auch in diesem Fall drei parallel angesteuerte Feldeffekttransistoren.

Die Anordnung gemäss dem Blockschaltbild von Fig. 5 kann in Fig. 1 (in Verbindung mit Fig. 3 oder insbesondere mit Fig. 4) anstelle des Eingangsregelverstärkers 10 treten. Diese Schaltung eignet sich bekanntermassen für den Fall, dass der Sendepegel festgelegt und im Empfänger bekannt ist, so dass aus dem Empfangspegel die Dämpfung ermittelt werden kann. Hierfür dient ein Vergleicher 20, der den Pegelsollwert mit dem tatsächlichen Empfangspegel vergleicht und abhängig von einer Abweichung einen Amplitudenregelverstärker 22 und einen Dämpfungsentzerrer 24 steuert. Der Amplitudenregelverstärker 22 sorgt dafür, dass den nachfolgenden Stufen unabhängig von der Dämpfung des Übertragungswegs immer die gleiche Signalspannung angeboten wird. Gleichzeitig wird der automatische Dämpfungsentzerrer auf die dem Empfangspegel entsprechende Entzerrerkurve eingestellt. Insbesondere bei der Datenübertragung über Pupinleitungen kann ein nachfolgender Entzerrer gemäss Fig. 4 zusätzlich für die Laufzeitentzerrung sorgen.

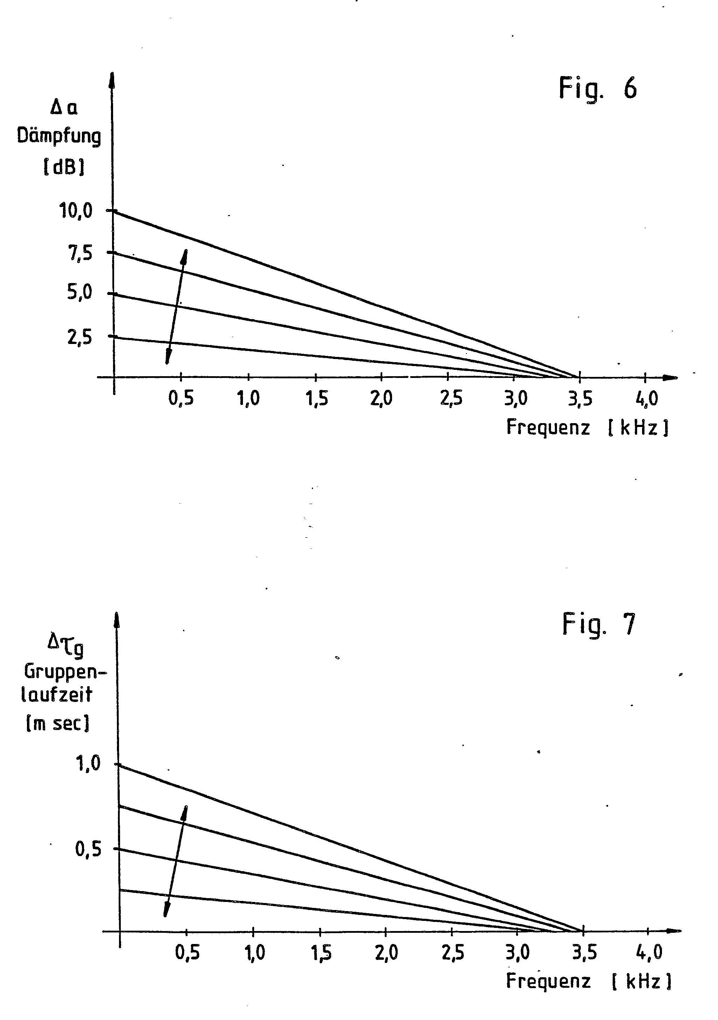

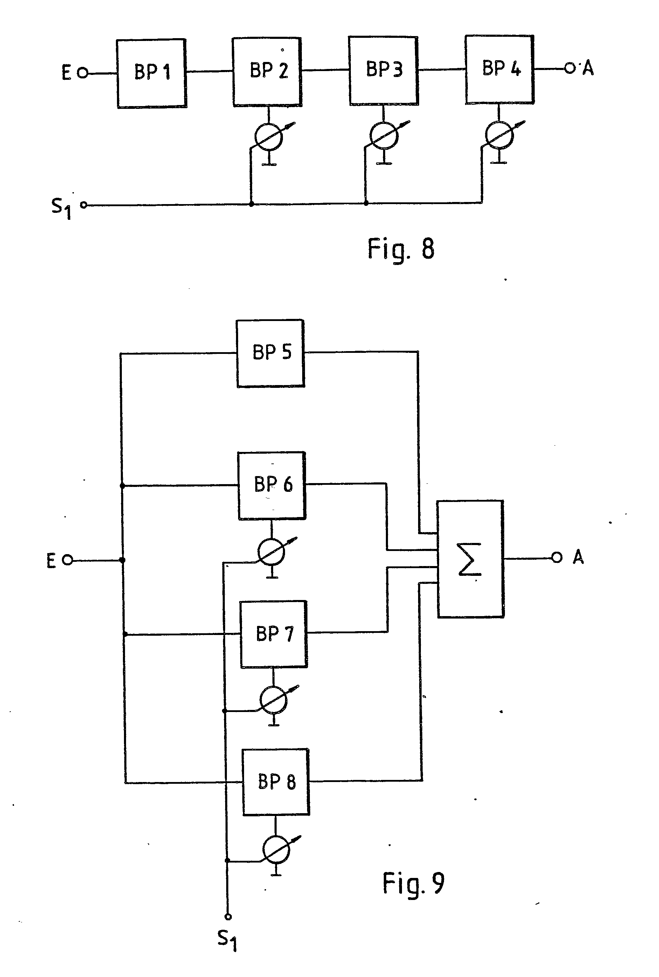

Fig. 6 zeigt die Entzerrerkurven des Entzerrers von Fig. 3, wobei der Doppelpfeil den Regelbereich kennzeichnet. Diese Entzerrerkurven sind zur Entzerrung bei üblichen Postleitungen geeignet. Fig. 7 zeigt die Entzerrerkurven des Entzerrers nach Fig. 4, wobei ebenfalls mit dem Doppelpfeil der Regelbereich eingetragen ist. Diese Entzerrerkurven eignen sich zur Laufzeitentzerrung üblicher Pupinkabel.

In Fig. 8 ist eine Blockdarstellung des Entzerrers nach Fig. 4 gezeigt, durch die die Reihenschaltung der einzelnen Bandpassstufen BP1 bis BP4 deutlich wird. Hierbei ist für jede Bandpassstufe BP2, BP3, BP4 auch das über den Eingang $S_1$ mit einem Stellsignal anzusteuernde Stellglied gezeigt, das gemäss Fig. 4 jeweils aus drei Widerständen und einem Transistor besteht. Fig. 9 zeigt eine äquivalente Anordnung von vier Bandpassstufen BP5 bis BP8 in Parallelschaltung, wobei die Ausgangssignale dieser Bandpassstufen in einer Summierschaltung $\Sigma$ zusammengefasst sind, deren Ausgang wiederum den Schaltungsausgang A bildet. In der Parallelschaltung sind die Bandpassstufen sowie die zugehörigen Stellglieder gegenüber der Summenschaltung anders zu dimensionieren. Es ist möglich, mit den beiden in Fig. 8 und 9 gezeigten Schaltungsprinzipien übereinstimmende Ergebnisse zu erzielen.

**Patentansprüche**

1. Vorrichtung zur automatischen Entzerrung auf der Empfangsseite eines elektrischen Datenübertragungsweges, mit einem mittels eines Stellsignals einstellbaren Entzerrer (12, 12'), einer vom Empfangssignal angesteuerten Taktgeneratoreinrichtung (18), die ein Taktsignal von der Schrittlänge des Empfangssignals umgekehrt proportionaler Frequenz erzeugt, und einer von der Taktgeneratoreinrichtung (18) gesteuerten Stellsignalerzeugungseinrichtung (14), die eine gleichrichtend wirkende Schaltung (141) und einen dieser nachgeschalteten Integrator (143) mit einer einem Vielfachen der Schrittlänge des Empfangssignals entsprechenden Integrationszeit umfasst, wobei das Ausgangssignal des Integrators (143) das Stellsignal für den Entzerrer (12; 12') ist, dadurch gekennzeichnet, dass die Taktgeneratoreinrichtung (18) zur Synchronisierung des Taktsignals mit den Sollzeitpunkten der Schrittumschläge des Empfangssignals ausgebildet ist, dass die gleichrichtend wirkende Schaltung (141) mit dem Empfangssignal beaufschlagt ist und dass zwischen den Ausgang der gleichrichtend wirkenden Schaltung (141) und den Eingang des Integrators (143) ein vom Taktsignal gesteuerter Schalter (142) geschaltet ist.

2. Vorrichtung nach Anspruch 1, dadurch gekennzeichnet, dass das Taktsignal Taktimpulse enthält, von denen jeder eine Breite ($t_2$) gleich oder vorzugsweise geringer als eine Schrittlänge besitzt und symmetrisch zu einem Sollzeitpunkt (T) der Schrittumschläge liegt.

3. Vorrichtung nach einem der vorhergehenden Ansprüche, dadurch gekennzeichnet, dass dem Eingang des Entzerrers (12; 12') und/oder dem Eingang der Taktgeneratoreinrichtung (18) und dem Eingang der gleichrichtend wirkenden Schaltung (141) ein Regelverstärker (10) vorgeschaltet ist, dessen Ausgangspegel unabhängig von der Dämpfung des Übertragungsweges ist.

4. Vorrichtung nach einem der vorhergehenden Ansprüche, dadurch gekennzeichnet, dass der Entzerrer ein Dämpfungsentzerrer (12) ist.

5. Vorrichtung nach einem der Ansprüche 1 bis 3, dadurch gekennzeichnet, dass der Entzerrer ein Laufzeitentzerrer (12') ist.

6. Vorrichtung nach einem der vorhergehenden Ansprüche, dadurch gekennzeichnet, dass der Entzerrer ein Verstärker ist, dessen Frequenzgang hinsichtlich Betrag und/oder Phase vom Stellsignal (S) steuerbar ist.

7. Vorrichtung nach einem der vorhergehenden Ansprüche, dadurch gekennzeichnet, dass bei Verwendung eines mit definiertem Pegel gespeisten Datenübertragungsweges ein vorgeschalteter Regelverstärker (22) mit einem adaptiven Dämpfungsentzerrer (24) kombiniert ist.

8. Vorrichtung nach einem der vorhergehenden Ansprüche, dadurch gekennzeichnet, dass als Integrator (143) ein Verzögerungsglied mit einer zur Abtastperiode des Schalters (142) grossen Zeitkonstante dient.

9. Vorrichtung nach einem der vorhergehenden Ansprüche, dadurch gekennzeichnet, dass der Entzerrer (12; 12') eine automatische Verstärkungsregelung aufweist, die den Ausgangspegel unabhängig von der Entzerrereinstellung macht.

10. Vorrichtung nach einem der vorhergehenden Ansprüche, dadurch gekennzeichnet, dass die Taktgeneratoreinrichtung (18) eine Synchroneinrichtung (181), die jeweils mit einem Sollzeitpunkt der Schrittumschläge des Empfangssignals zeitlich zusammenfallende Taktsignale erzeugt, eine der Synchroneinrichtung (181) nachgeschaltete Verzögerungsschaltung (182) und eine letzterer nachgeschaltete Impulsformereinrichtung (183) umfasst, die das Taktsignal abgibt.

11. Vorrichtung nach Anspruch 10, dadurch gekennzeichnet, dass der Taktgeneratoreinrichtung (18) ein symmetrischer Schwellwertschalter (16) vorgeschaltet ist.

**Claims**

1. Arrangement for automatic equalization on the receiving side of an electrical data-transmission path, with an equalizer (12, 12') adjustable by means of a control signal, with a timing pulse generating means (18) which is controlled by the received signal and which from the step length of the received signal generates an inversely proportional frequency timing signal, and with a control-signal generating means (14) which is controlled by the timing pulse generating means and which comprises a circuit (141) with a rectifying action and a integrator (143) connected downstream thereof and having an integation time corresponding to a multiple of the step length of the received signal, wherein the output signal of the integrator (143) is the control signal for the equalizer (12; 12'), characterised in that the timing pulse generating means (18) is adapted for synchronisation of the timing signal with the desired time points of the step transitions of the received signal, in that the circuit (141) with a rectifying action is acted upon by the received signal, and in that a switch (142) controlled by the timing signal is connected between the output of the circuit (141) with a rectifying action and the input of the integrator (143).

2. Arrangement according to Claim 1 characterised in that the timing signal comprises timing pulses, each of which has a width ($t_2$) equal to or preferably less than one step length and lies symmetrical to a desired time point (T) of the step transitions.

3. Arrangement according to one of the preceding Claims characterised in that a regulating amplifier (10) is connected upstream of the input of the equalizer (12; 12') and/or of the input of the timing pulse generating means (18) and of the input of the circuit (141) with a rectifying action, the output level of which is independent of the attenuation of the transmission path.

4. Arrangement according to one of the preceding Claims, characterised in that the equalizer is an attenuation equalizer (12).

5. Arrangement according to one of Claims 1 to 3, characterised in that the equalizer is a delay equalizer (12').

6. Arrangement according to one of the preceding Claims, characterised in that the equalizer is an amplifier, the frequency characteristic of which is controllable with regard to the value and/or phase of the control signal (S).

7. Arrangement according to one of the preceding Claims, characterised in that when using a data-transmission path fed at a definite level a regulating amplifier (22) connected upstream is combined with an adaptive attenuation equalizer (24).

8. Arrangement according to one of the preceding Claims, characterised in that as integrator (143) there is used a delay element with a long time constant relative to the sampling interval of the switch (142).

9. Arrangement according to one of the preceding Claims, characterised in that the equalizer (12; 12') has an automatic amplification control which renders the output level independent of the equalizer adjustement.

10. Arrangement according to one of the preceding Claims, characterised in that the timing pulse generating means (18) comprises a synchronizing device (181), which produces timing signals coinciding in time respectively with a desired time point of the step transitions of the received signal, a delay circuit (182) connected downstream of the synchronizing device (181), and a final downstream connected pulse-shaping means (183) which emits the timing signal.

11. Arrangement according to Claim 10, characterised in that a symmetrical threshold level switch (16) is connected upstream of the timing pulse generating means (18).

**Revendications**

1. Dispositif d'égalisation automatique, du côté réception d'une voie électrique de tran - mission des données, comportant un égaliseur (12, 12') réglable au moyen d'un signal de réglage, un dispositif générateur de rythme (18) commandé par le signal reçu, lequel dispositif (18) produit un signal de rythme d'une fréquence inversement proportionnelle à la durée d'un élément du signal reçu, et un dispositif producteur de signaux de réglage (14) commandé par le dispositif générateur de rythme (18), lequel dispositif (14) comporte un montage (141) ayant un effet de redressement, et un intégrateur (143) monté à la suite de celui-ci, dont le temps d'intégration correspond à un multiple de la durée d'un élément du signal reçu, tandis que le signal de sortie de l'intégrateur (143) est le signal de réglage de l'égaliseur (12, 12'), caractérisé en ce que le dispositif générateur de rytme (18) est réalisé pour synchroniser le signal de rythme avec les instants théoriques des transitions entre éléments du signal reçu, que le montage (141) à effet de redressement est alimenté par le signal reçu, et qu'entre la sortie du montage à effet de redressement (141) et l'entrée de l'intégrateur (143) est monté un interrupteur (142) commandé par le signal de rythme.

2. Dispositif selon la revendication 1, caractérisé en ce que le signal de rythme comporte des impulsions de rythme dont chacune a une largeur ($t_2$) égale ou de préférence inférieure à la durée d'un élément du signal reçu et est symétrique par rapport à l'instant théorique (T) des transitions entre éléments.

3. Dispositif selon l'une des revendications précédentes, caractérisé en ce qu'avant l'entrée de l'égaliseur (12, 12') et/ou l'entrée du dispositif générateur de rythme (18) et l'entrée du montage à effet de redressement (141) est monté un amplificateur de réglage (10) dont le niveau de sortie est indépendant de l'atténuation de la voie de transmission.

4. Dispositif selon l'une des revendications précédentes, caractérisé en ce que l'égaliseur est un égaliseur d'atténuation (12).

5. Dispositif selon l'une des revendications 1 à 3, caractérisé en ce que le correcteur est un égaliseur de temps de propagation (12').

6. Dispositif selon l'une des revendications précédentes, caractérisé en ce que l'égaliseur est un amplificateur, dont la courbe de réponse peut être commandée par le signal de réglage (S) en ce qui concerne l'amplitude et/ou la phase.

7. Dispositif selon l'une des revendications précédentes, caractérisé en ce que, lors de l'utilisation d'une voie de transmission de données alimentée avec un niveau défini, un amplificateur de réglage (22) monté avant le circuit est combiné avec un égaliseur d'attenuation (24) adaptatif.

8. Dispositif selon l'une des revendications précédentes, caractérisé en ce qu'un élément de retard ayant une grande constante de temps par rapport à la période d'échantillonnage de l'interrupteur (142) sert d'intégrateur (143).

9. Dispositif selon l'une des revendications précédentes, caractérisé en ce que l'égaliseur (12, 12') comporte un réglage d'amplification automatique, qui rend le niveau de sortie indépendant du réglage d'égalisation.

10. Dispositif selon l'une des revendications précédentes, caractérisé en ce que le dispositif générateur de rythme (18) comporte un dispositif de synchronisation (181) qui produit chaque fois des signaux de rythme coincidant dans le temps avec l'instant théorique de transition entre éléments du signal reçu, un montage de retard (182) monté à la suite du dispositif de synchronisation (182) et un dispositif formateur d'impulsions (183) monté à la suite de ce dernier, et qui délivre le signal de rythme.

11. Dispositif selon la revendication 10, caractérisé en ce qu'avant le dispositif générateur de rythme (18) est monté un commutateur à valeur de seuil (16).

0 028 706

Fig. 1

Fig. 2

9

Fig. 3

Fig. 4

Fig. 5

0 028 706

Fig. 6

Δa
Dämpfung
[dB]

Frequenz [kHz]

Fig. 7

Δτg
Gruppenlaufzeit
[m sec]

Frequenz [kHz]

15

Fig. 8

Fig. 9

17